# EUROPÄISCHE PATENTSCHRIFT

(11) **EP 0 482 282 B1**
(45) Veröffentlichungstag und Bekanntmachung des Hinweises auf die Patenterteilung: **26.01.1994**
(21) Anmeldenummer: 91104177.0
(22) Anmeldetag: 18.03.1991
(51) Int. Cl.: F16F 1/38, F16F 13/00, B60G 7/02

(54) **Axial-Buchsenlager**
Axial bushing
Support de manchette axial

(30) Priorität: 22.10.1990 DE 4033569
(43) Veröffentlichungstag der Anmeldung: 29.04.1992
(73) Patentinhaber: METZELER GIMETALL AG, D-80992 München (DE)
(72) Erfinder: Kaiser, Franz-Josef, W-5431 Bannberscheid (DE)
(74) Vertreter: Seibert, Hannelore

(56) Entgegenhaltungen:
- EP-A- 0 384 111
- DE-A- 3 240 981
- DE-A- 3 916 174
- GB-A- 1 387 726

## Beschreibung

Die Erfindung bezieht sich auf ein Axial-Buchsenlager, insbesondere für Kraftfahrzeuge, mit einer Außenhülse und einem zentralen, kegelförmige Kerne tragenden Bolzen, zwischen denen mindestens ein axiale Kräfte aufnehmender Gummikörper eingespannt ist.

Ein solches Buchsenlager ist aus de FR-2 285 550 bekannt. Dabei ist der Gummikörper fest zwischen Außenhülse und dem Bolzen mit den kegeligen Kernen eingespannt, wobei zusätzliche axiale Bewegungen durch vom Bolzen radial abragende Ringscheiben begrenzt werden. Damit ergibt sich ein relativ hartes Buchsenlager, das nur relativ geringe Freiwege in axialer und radialer Richtung aufweist und damit Schwingungen nur unzureichend isolieren kann.

Ein ähnliches Buchsenlager ist aus der GB 434 583 bekannt, bei dem zwei Gummikörper auf einem zylindrischen Bolzen angeordnet sind und sich jeweils zwischen einem Bund auf dem Bolzen und eingezogenen Stirnwänden der Außenhülse oder zwischen zwei Anschlägen auf den Bolzen und einer mittigen Einziehung der Außenhülse abstützen. Um eine gewisse Progressivität des Ansprechens zu erreichen, sind die Gummikörper im Querschnitt angenähert parallelogrammförmig ausgebildet, jedoch ebenfalls fest zwischen Bolzen und Außenhülse eingespannt. Auch hiermit ist nur eine unzureichende Schwingungsisolierung möglich.

Der vorliegenden Erfindung liegt demgegenüber die Aufgabe zugrunde, ein solches Buchsenlager so auszubilden, daß es axiale Kräfte und axiale Schwingungen hinreichend weich aufnehmen kann und dabei insbesondere auch als Drehmomentstütze bei Kraftfahrzeugmotoren dienen soll, um Bewegungen des Motors zu begrenzen. Insbesondere soll eine solche Drehmomentstütze geschaffen werden, mit der ein körperschallisoliertes Anschlagen insbesondere bei Lastwechseländerungen sicher gewährleistet ist, d.h. daß ein solches Lager imstande ist, axiale Kräfte in beiden Richtungen aufzunehmen und dabei die Übertragung von Körperschall weitgehend zu minimieren.

Zur Lösung dieser Aufgabe ist erfindungsgemäß vorgesehen, daß zwei hohlkegelförmige Innenflächen aufweisende Gummikörper mit ihren Kegelflächen gegeneinander gerichtet auf die kegelförmigen Kerne gehaftet sind und sich bei axialer Verschiebung gegen mindestens eine, mit der Außenhülse verbundenen und von dieser radial nach innen ragenden Ringwandung abstützen.

Dabei ist es zweckmäßig, wenn die Gummikörper mit hohlkegelförmigen Innenflächen eine zylindrische Außenfläche aufweisen und mit Spiel innerhalb der Außenhülse geführt sind.

Durch diese Gestaltung von zwei gegeneinander gerichteten Gummikörpern entsprechender Gestaltung und Abstützung wird in der axialen Federcharakteristik ein kontinuierlicher Übergang von einer weicheren Federsteifigkeit zu einer härteren Federsteifigkeit bewirkt, wenn durch das Drehmoment des Motors jeweils ein Gummikörper an einer Ringwandung zur Anlage kommt, so daß damit bei Stoßbelastungen die Körperschallübertragung vermindert wird.

Die kegelförmigen Kerne können dabei mit ihren Kegelspitzen gegeneinandergerichtet auf den Bolzen verspannt sein und die Ringwandung als Mittelwandung in der Außenhülse verlaufen, gegen die sich die Gummikörper mit ihren breiteren Basen abstützen.

Es ist aber auch möglich, daß die kegelförmigen Kerne mit ihren Kegelbasen gegeneinandergerichtet auf dem Bolzen verspannt sind und an beiden axialen Enden der Außenhülse je eine radial nach innen ragende Ringwandung vorgesehen ist, gegen die sich die Gummikörper mit ihren breiteren Basen abstützen.

Zweckmäßig ist es, wenn die Gummikörper auf ihren den Ringwandungen benachbarten Stirnflächen Erhebungen aufweisen, die einen Mindestabstand zur Mittelwand bestimmen, wodurch sich die Federkennlinie, insbesondere im Anfangsbereich, weiter beeinflussen läßt.

Die Kerne können sich dabei an einem den Mindestabstand der Gummikörper bestimmenden mittigen Bund des zentralen Bolzens abstützen, wobei die Kerne über auf die Bolzenenden aufgeschraubte Hülsen gegeneinander verspannt sind.

Es ist aber auch möglich, daß die Gummikörper eine kegelförmige Innenfläche und eine kegelförmige Außenfläche aufweisen.

Dabei können die Gummikörper dann an ihrer Basis gegen die Außenhülse abgedichtet und der freie Raum zwischen Außenhülse und kegelförmiger Außenfläche der Gummikörper mit einer hochviskosen Flüssigkeit gefüllt sein, wobei die beiden Flüssigkeitskammern über Axialbohrungen in der ringförmigen Mittelwandung miteinander in Verbindung stehen.

Damit ist zusätzlich noch eine gute Bedämpfung der Anschlagbewegung möglich, wobei die Federcharakteristik bei Zug oder Druck durch die Größe dieser Axialbohrungen verändert werden kann.

Zur weiteren Einstellung der S-förmigen Federkennlinie ist es möglich, daß die beiden Kerne - und damit die Gummikörper - unterschiedliche Winkel ihrer Außenkegel aufweisen.

Ferner können die beiden Gummikörper unterschiedliche Federsteifigkeit aufweisen.

Mit beiden Maßnahmen, einzeln oder im Zusammenwirken, ist es möglich, den beiden Ästen der S-förmigen Federkennlinie einen unterschiedlichen Verlauf zu geben, so daß die auftretenen Axialkräfte in jeder Richtung mit einer anderen Charakteristik abgestützt werden.

Anhand einer schematischen Zeichnung sind Aufbau und Funktionsweise von Ausführungsbeispielen nach der Erfindung näher erläutert. Dabei zeigen
- Fig. 1: einen Längsschnitt durch ein Buchsenlager mit zylindrischen Gummikörpern und kegelförmigen Kernen, die mit ihren Spitzen einander entgegengerichtet verspannt sind,
- Fig. 2: einen Längsschnitt durch ein gleichartiges Lager mit zusätzlichen bedämpfenden Flüssigkeitskammern und
- Fig. 3: einen Längsschnitt durch ein Buchsenlager, deren Kerne mit ihren Kegelbasen gegeneinander verspannt sind.

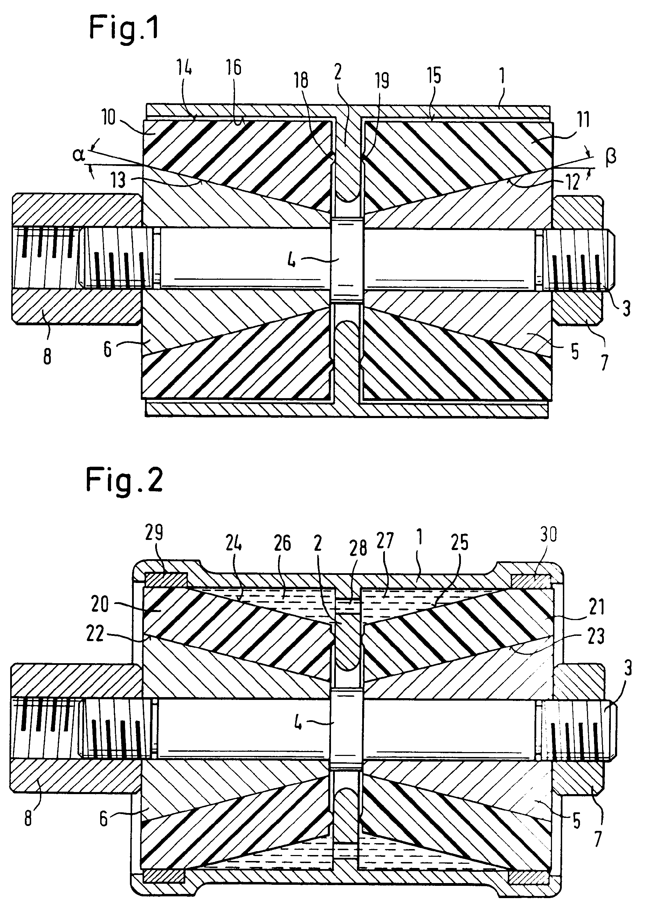

Wie man aus Fig. 1 ersieht, weist das Buchsenlager eine zylindrische Außenhülse 1 mit einer ringförmigen, sich radial nach innen erstreckenden Mittelwandung 2 auf, die sich in etwa über ein Viertel bis ein Drittel des Durchmessers erstreckt. Auf einen zentral geführten Bolzen 3 mit einem mittigen Bund 4 etwa von der Breite der Mittelwandung 2 sind von beiden Seiten kegelförmige, metallische Kerne 5 und 6 mit ihren Spitzen gegeneinander aufgesetzt und über je eine auf die Enden der Bolzen 3 aufgeschraubte Mutter 7 und Hülse 8 gegeneinander verspannt. Auf die metallischen Kerne 5 und 6 sind außen rotationssymmetrische Gummikörper 10 und 11 gehaftet, die eine hohlkegelförmige Innenfläche 12 bzw. 13 entsprechend der Neigung der Kerne 5 und 6 sowie eine zylindrische Außenfläche 14 und 15 aufweisen, wobei diese Außenfläche 14 und 15 geringfügig kleiner sind als der Innendurchmesser 16 der Hülse 1.

Die Gummikörper 10 und 11 tragen dabei auf den der Mittelwandung 2 benachbarten Stirnflächen noch Nocken oder ringförmige Erhebungen 18 und 19, die einen vorgegebenen Abstand zu den Stirnflächen der Gummikörper 10 und 11 definieren.

Bei einer axialen Auslenkung des Bolzens 3 wird je nach Verschiebungsrichtung einer der Gummikörper 10 oder 11 zwischen dem entsprechenden Kern 5 oder 6 und der Mittelwandung 2 mit ansteigender Progression zusammengepreßt, wobei wegen der zunehmenden Pressung in der axialen Federcharakteristik der Gummikörper 10 bzw. 11 ein kontinuierlicher Übergang von einer weicheren Anfangs-Federsteifigkeit in eine härtere Endfedersteifigkeit übergeht. Wenn ein derartiges Buchsenlager als Drehmomentstütze zwischen einem Motor und der Karosserie des Fahrzeugs angeordnet ist, treten derartige axiale Belastungen in beiden Richtungen und meist als schlagartige Stoßbelastungen auf. Diese Stöße können durch die Gestaltung des Buchsenlagers zunächst relativ weich aufgenommen werden, so daß damit die Körperschallübertragung stark vermindert wird.

Die Gestaltung der Buchse ermöglicht dabei auch ausreichend große kardanische Bewegungen, wenn die Buchse durch Kräfte in Radialrichtung und in Axialrichtung gleichzeitig belastet wird.

Es ist dabei aber auch möglich, daß die Buchse je nach Richtung der einwirkenden Axialkraft eine unterschiedliche Kennlinie aufweist. Dies kann dadurch erreicht werden, daß die Kegelwinkel und unterschiedlich gewählt werden, wodurch sich je nach Krafteinwirkungsrichtung ein unterschiedlicher Verlauf der Pressung und damit der Federkennlinie ergibt. Statt dessen oder zusätzlich ist es auch möglich, Gummikörper 10 bzw. 11 von unterschiedlicher Federsteifigkeit zu verwenden, um damit einen unterschiedlichen Verlauf der beiden Äste der Federkennlinie zu erhalten.

Eine zusätzliche Dämpfung auftretender Stoßbelastungen ist mit einer Buchse entsprechend dem Ausführungsbeispiel nach Fig. 2 möglich. Hierbei weisen die beiden Gummikörper 20 und 21 sowohl eine kegelförmige Innenfläche 22 und 23, als auch eine kegelförmige Außenfläche 24 und 25 auf. Die sich dadurch ergebenden Ringräume 26 und 27 zwischen den Gummikörpern 20 und 21 und der Außenhülse 1 sind dann mit einer hochviskosen Flüssigkeit gefüllt, die über Bohrungen 28 in der Mittelwandung 2 von einer Kammer 26 in die andere Kammer 27 übertreten können. Selbstverständlich müssen dabei die Gummikörper 20 und 21 an ihrer Basis über Dichtungen 29 und 30 gegen die Außenhülse 1 verspannt sein, um ein Austreten der Flüssigkeit zu verhindern.

Damit können Stoßbewegungen noch zusätzlich bedämpft werden, wodurch die Federcharakteristik bei Zug oder Druck durch Änderung der Durchmesser der Bohrungen 28, die auch als entsprechende Spalte ausgebildet sein können, in der Mittelwand 2 verändert werden kann.

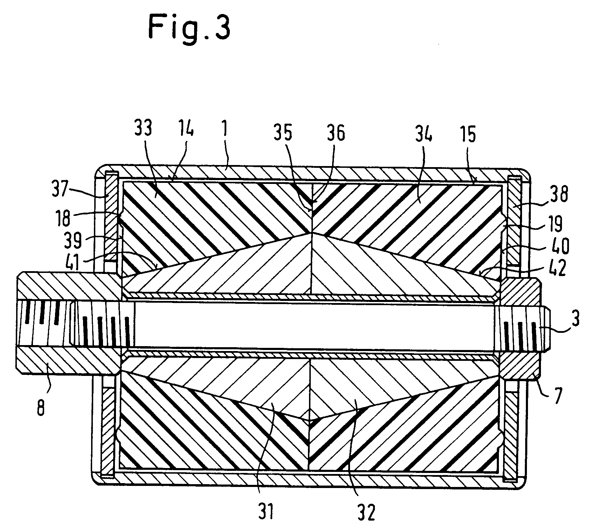

Es ist prinzipiell aber auch möglich, Kerne und Gummikörper umgekehrt einzubauen, wie das in Fig. 3 gezeigt ist. Danach sind die kegelförmigen Kerne 31 und 32 mit ihren breiteren Basen direkt gegeneinander durch die axial auf den Bolzen 3 aufgeschraubte Mutter 7 und Hülse 8 verspannt. Die entsprechend aufgesetzten Gummikörper 33 und 34 liegen jetzt mittig mit ihren schmaleren Stirnseiten 35 und 36 aneinander an. Da aber jetzt in dieser Einbaulage die Gummikörper 33 und 34 in ihrem Innendurchmesser nach außen abnehmen und damit in dieser Richtung dicker und nicht mehr von den Kernen direkt verspannt werden, sind an den Außenstirnseiten noch an der Außenhülse 1 festgelegte Ringwände 37 und 38 vorgesehen, gegen die sich die Gummikörper 33 und 34 mit ihren breiteren Basen 39 und 40 abstützen.

Die Gummikörper 33 und 34 sind hier in gleicher Weise mit ihren konisch verlaufenden Innenflächen 41 und 42 auf die Kerne 31 und 32 aufvulkanisiert und mit ihren zylindrischen Außenflächen 14 und 15 mit Spiel in der Hülse 1 geführt.

Die Funktionsweise ist dabei insgesamt die gleiche wie bei dem Axialbuchsenlager nach Fig. 1.

Insgesamt ergeben sich also Buchsenlager mit Axialentkopplung, die nur einen sehr kleinen Bauraum aufweisen und mit denen eine beliebige Federkennlinie, beginnend mit einer möglichst kleinen Grundsteifigkeit, bis zu einem stark progressiven Steifigkeitsverlauf eingestellt werden kann.

Es hat sich dabei auch ergeben, daß insbesondere bei der Verwendung als Drehmomentstütze relativ aufwendige Radialbuchsen durch derartige Axialbuchsen, die eine leichtere Anbindung ermöglichen und weniger Platz benötigen, ersetzt werden können.

## Patentansprüche

1. Axial-Buchsenlager, insbesondere für Kraftfahrzeuge, mit einer Außenhülse und einem zentralen, kegelförmige Kerne tragenden Bolzen, zwischen denen mindestens ein axiale Kräfte aufnehmender Gummikörper eingespannt ist, dadurch gekennzeichnet, daß zwei, hohlkegelförmige Innenflächen (12, 13; 22, 23; 41, 42) aufweisende Gummikörper (10, 11; 20, 21; 33, 34) mit ihren Kegelflächen gegeneinandergerichtet auf den kegelförmigen Kernen (5, 6; 31, 32) gehaftet sind und sich bei axialer Verschiebung gegen mindestens eine, mit der Außenhülse (1) verbundenen und von dieser radial nach innen ragenden Ringwandung (2; 37, 38) abstützen.

2. Axial-Buchsenlager nach Anspruch 1, dadurch gekennzeichnet, daß die Gummikörper (10, 11; 33, 34) mit hohlkegeligen Innenflächen (12, 13; 41, 42) eine zylindrische Außenfläche (14, 15) aufweisen und mit Spiel innerhalb der Außenhülse (1) geführt sind.

3. Axial-Buchsenlager nach Anspruch 1 und 2, dadurch gekennzeichnet, daß die kegelförmigen Kerne (5, 6) mit ihren Kegelspitzen gegeneinandergerichtet auf dem Bolzen (3) verspannt sind und die Ringwandung (2) als Mittelwandung in der Außenhülse (1) verläuft, gegen die sich die Gummikörper (10, 11) mit ihren breiteren Basen abstützen.

4. Axial-Buchsenlager nach Anspruch 1 und 2, dadurch gekennzeichnet, daß die kegelförmigen Kerne (31, 32) mit ihren Kegelbasen gegeneinandergerichtet auf dem Bolzen (3) verspannt sind und daß an beiden axialen Enden der Außenhülse (1) je eine radial nach innen ragende Ringwandung (37, 38) vorgesehen ist, gegen die sich die Gummikörper (33, 34) mit ihren breiteren Basen (39, 40) abstützen.

5. Axial-Buchsenlager nach Anspruch 3 oder 4, dadurch gekennzeichnet, daß die Gummikörper (10, 11; 20, 21; 33, 34) auf ihren den Ringwandungen (2; 37, 38) benachbarten Stirnflächen einen Mindestabstand zu den Ringwandungen (2; 37, 38) bestimmende Erhebungen (18, 19) aufweisen.

6. Axial-Buchsenlager nach Anspruch 3, dadurch gekennzeichnet, daß sich die Kerne (5, 6;) an einen den Mindestabstand der Gummikörper (10, 11; 20, 21) bestimmenden mittigen Bund (4) des zentralen Bolzens (3) abstützen.

7. Axial-Buchsenlager nach Anspruch 3 oder 4, dadurch gekennzeichnet, daß die Kerne (5, 6; 31, 32) über auf die Enden des Bolzens (3) aufgeschraubte Hülsen (7, 8) gegeneinander verspannt sind.

8. Axial-Buchsenlager nach Anspruch 1, dadurch gekennzeichnet, daß die Gummikörper (20, 21) kegelförmige Innenflächen (22, 23) und kegelförmige Außenflächen (24, 25) aufweisen.

9. Axial-Buchsenlager nach Anspruch 8, dadurch gekennzeichnet, daß die Gummikörper (20, 21) an ihrer Basis gegen die Außenhülse (1) abgedichtet (29, 30) sind und der freie Raum (26, 27) zwischen Außenhülse (1) und den kegelförmigen Außenflächen (24, 25) der Gummikörper (20, 21) mit einer hochviskosen Flüssigkeit gefüllt ist, wobei die beiden Flüssigkeitskammern (26, 27) über Axialbohrungen (28) in der ringförmigen Mittelwandung (2) miteinander in Verbindung stehen.

10. Axial-Buchsenlager nach einem oder mehreren der Ansprüche 1 bis 9, dadurch gekennzeichnet, daß die beiden Kerne (5, 6; 31, 32) unterschiedliche Winkel (α,β) ihre Außenkegel aufweisen.

11. Axial-Buchsenlager nach einem oder mehreren der Ansprüche 1 bis 10, dadurch gekennzeichnet, daß die beiden Gummikörper (10, 11; 20, 21; 33, 34) unterschiedliche Federsteifigkeit aufweisen.

## Claims

1. Axial bush bearing, in particular for motor vehicles, with an outer sleeve and a central pin bearing conical cores, between which sleeve and pin at least one rubber member, which absorbs axial forces, is gripped, characterised in that two rubber members (10, 11; 20, 21; 33, 34) having hollow conical inner surfaces (12, 13; 22, 23; 41, 42) are bonded to the conical cores (5, 6; 31, 32) with their conical surfaces directed towards one another and in the case of an axial displacement are supported against at least one annular wall (2; 37, 38) which is connected to the outer sleeve (1) and projects radially inwards from the latter.

2. Axial bush bearing according to claim 1, characterised in that the rubber members (10, 11; 33, 34) with hollow conical inner surfaces (12, 13; 41, 42) have a cylindrical outer surface (14, 15) and are guided with clearance inside the outer sleeve (1).

3. Axial bush bearing according to claims 1 and 2, characterised in that the conical cores (5, 6) are secured to the pin (3) with their cone vertices directed towards one another, and the annular wall (2) extends as a central wall in the outer sleeve (1), against which wall the rubber members (10, 11) are supported by way of their wider bases.

4. Axial bush bearing according to claims 1 and 2, characterised in that the conical cores (31, 32) are secured to the pin (3) with their cone bases directed towards one another, and that a respective annular wall (37, 38), which projects radially inwards, is provided at the two axial ends of the outer sleeve (1), against which walls the rubber members (33, 34) are supported by way of their wider bases (39, 40).

5. Axial bush bearing according to claim 3 or 4, characterised in that the rubber members (10, 11; 20, 21; 33, 34) comprise elevations (18, 19) on their end faces which are adjacent to the annular walls (2; 37, 38), which elevations define a minimum spacing from the annular walls (2; 37, 38).

6. Axial bush bearing according to claim 3, characterised in that the cores (5, 6) are supported at a central collar (4), which defines the minimum spacing of the rubber members (10, 11; 20, 21), of the central pin (3).

7. Axial bush bearing according to claim 3 or 4, characterised in that the cores (5, 6; 31, 32) are secured against one another via sleeves (7, 8) which are screwed onto the ends of the pin (3).

8. Axial bush bearing according to claim 1, characterised in that the rubber members (20, 21) have conical inner surfaces (22, 23) and conical outer surfaces (24, 25).

9. Axial bush bearing according to claim 8, characterised in that the rubber members (20, 21) are sealed off (29, 30) from the outer sleeve (1) at their base and the free space (26, 27) between the outer sleeve (1) and the conical outer surfaces (24, 25) of the rubber members (20, 21) is filled with a highly viscous liquid, the two liquid chambers (26, 27) communicating with one another via axial bores (28) in the annular central wall (2).

10. Axial bush bearing according to one or more of claims 1 to 9, characterised in that the outer cones of the two cores (5, 6; 31, 32) have different angles (α, β).

11. Axial bush bearing according to one or more of claims 1 to 10, characterised in that the spring stiffness of the two rubber members (10, 11; 20, 21; 33, 34) is different.

## Revendications

1. Support axial à coussinet, notamment pour des véhicules automobiles, comprenant un manchon extérieur et un axe central portant des noyaux tronconiques entre lesquels est bloquée au moins une pièce en caoutchouc absorbant les forces axiales, caractérisé en ce que deux pièces en caoutchouc (10, 11; 20, 21; 33, 34), ayant des faces intérieures (12, 13; 22, 23; 41, 42) en forme de cônes creux sont collées par leurs faces coniques tournées l'une vers l'autre sur les noyaux (5, 6; 31, 32) coniques et s'appuient, en cas de décalage axial, sur au moins une paroi annulaire (2; 37, 38) reliée au manchon (1) extérieur et faisant saillie de celui-ci radialement vers l'intérieur.

2. Support axial à coussinet suivant la revendication 1, caractérisé en ce que les pièces en caoutchouc (10, 11; 33, 34) à face intérieure (12, 13, 41, 42) en forme de cônes creux ont une face extérieure (145, 15) cylindrique et sont guidées avec jeu dans le manchon (1) extérieur.

3. Support axial à coussinet suivant la revendication 1 ou 2, caractérisé en ce que les noyaux (5, 6) coniques sont bloqués sur l'axe (3) en ayant leurs sommets de cône tournés l'une vers l'autre et la paroi (2) annulaire s'étend, en tant que paroi intermédiaire dans le manchon (1) extérieur contre lequel les pièces en caoutchouc (10, 11) s'appuient par leur base la plus large.

4. Support axial à coussinet suivant la revendication 1 ou 2, caractérisé en ce que les noyaux (31, 32) coniques sont bloqués sur l'axe (3) en ayant leurs bases de cône tournées l'une vers l'autre et en ce que, aux deux extrémités axiales du manchon (1) extérieur, sont prévues respectivement une paroi (37, 38) annulaire faisant saillie radialement vers l'intérieur, sur laquelle les pièces en caoutchouc (33, 34) s'appuient par leurs bases (39, 40) les plus larges.

5. Support axial à coussinet suivant la revendication 3 ou 4, caractérisé en ce que les pièces en caoutchouc (10, 11; 20, 21, 33, 34) comportent, sur leurs faces frontales voisines des parois (2; 37, 38) annulaires, des proéminences (18, 19) définissant une distance minimum par rapport aux parois (2; 37, 38) annulaires.

6. Support axial à coussinet suivant la revendication 3, caractérisé en ce que les noyaux (5, 6) s'appuient sur un collier (4) de l'axe (3) central, qui définit la distance minimum des pièces en caoutchouc (10, 11; 20, 21).

7. Support axial à coussinet suivant la revendication 3 ou 4, caractérisé en ce que les noyaux (5, 6; 31, 32) sont bloqués mutuellement par des bagues (7, 8) vissées sur les extrémités de l'axe (3).

8. Support axial à coussinet suivant la revendication 1, caractérisé en ce que les pièces en caoutchouc (20, 21) comportent des faces intérieures (22, 23) coniques et des faces extérieures (24, 25) coniques.

9. Support axial à coussinet suivant la revendication 8, caractérisé en ce que les pièces en caoutchouc (20, 21) sont rendues étanches (29, 30) sur leurs bases vis-à-vis du manchon (1) extérieur, et l'espace (26, 27) libre entre le manchon (1) extérieur et les faces extérieures (24, 25) coniques des pièces en caoutchouc (20, 21) est empli d'un liquide très visqueux, les deux chambres (26, 27) à liquide communiquant par des trous (28) axiaux ménagés dans la paroi intermédiaire (2) annulaire.

10. Support axial à coussinet suivant l'une ou plusieurs des revendications 1 à 9, caractérisé en ce que les cônes extérieurs des deux noyaux (5, 6; 31, 32) ont des angles différents (α, β).

11. Support axial à coussinet suivant la revendication 1 à 10, caractérisé en ce que les deux pièces en caoutchouc (10, 11; 20, 21; 33, 34) ont des rigidités élastiques différentes.
